# EUROPÄISCHE PATENTSCHRIFT

(11) **EP 2 087 019 B1**
(45) Veröffentlichungstag und Bekanntmachung des Hinweises auf die Patenterteilung: **29.05.2013**
(21) Anmeldenummer: 07819136.8
(22) Anmeldetag: 19.10.2007
(51) Int. Cl.: C08F 220/36, C04B 24/24, C08L 33/14, C08F 220/56

(54) **HYDROPHOB MODIFIZIERTE KATIONISCHE COPOLYMERE**
HYDROPHOBICALLY MODIFIED CATIONIC COPOLYMERS
COPOLYMÈRES CATIONIQUES MODIFIÉS DE FAÇON HYDROPHOBE

(30) Priorität: 27.10.2006 DE 102006050761
(43) Veröffentlichungstag der Anmeldung: 12.08.2009
(73) Patentinhaber: Construction Research & Technology GmbH, 83308 Trostberg (DE)
(72) Erfinder: FRIEDRICH, Stefan, 84518 Garching (DE); EBERWEIN, Michael, 84547 Emmerting (DE); SCHINABECK, Michael, 83352 Altenmarkt (DE); HERTH, Gregor, 83308 Trostberg (DE)
(86) Internationale Anmeldenummer: PCT/EP2007/009071
(87) Internationale Veröffentlichungsnummer: WO 2008/049549

(56) Entgegenhaltungen:
- WO-A-02/10229
- WO-A-2006/002936
- FR-A- 2 777 011

## Beschreibung

Die vorliegende Erfindung betrifft ein Copolymer, ein Verfahren zu dessen Herstellung, die Verwendung des Copolymers, sowie eine polymere Mischung und deren Verwendung.

In nicht fließfähigen Baustoffsystemen werden vielfach wasserlösliche nichtionische Abkömmlinge von Polysacchariden, insbesondere Cellulose- und Stärkederivate, als Rheologiemodifizierer und Wasserretentionsmittel eingesetzt, um das unerwünschte Verdunsten des Wassers, das für die Hydratation und Verarbeitbarkeit erforderlich ist, bzw. dessen Abfließen in den Untergrund zu verzögern bzw. verhindern. In Putzen, Klebemörteln, Spachtelmassen und Fugenfüllern, aber auch in Spritzbetonen für den Tunnelbau sowie in Unterwasserbetonen wird mit solchen Additiven die Wasserretention kontrolliert. Dadurch haben derartige Zusätze auch entscheidenden Einfluss auf die Konsistenz (Plastizität), Glättvermögen, Segregation, Klebrigkeit, Haftung (am Untergrund und am Werkzeug), Standfestigkeit und Abrutschwiderstand sowie Haftzug- und Druckfestigkeit bzw. Schwindung.

In der US-B-6,187,887 sowie in der US-A-2004/024154 werden hochmolekulare sulfogruppenhaltige Polymere beschrieben, die gute Wasserrückhaltungseigenschaften zeigen. Diesen Polymeren ist gemeinsam, dass diese Polyelektrolyte mit einer anionischen Nettoladung darstellen.

Eine wichtige Eigenschaft der Additive in Fliesenklebern und Putzen ist aber auch die Verdickung in Gegenwart von erhöhten Salzkonzentrationen.

Die Polymere gemäß US-B-6,187,887 zeigen unter solchen Bedingungen einen drastischen Abfall der Verdickung, während Additive gemäß US-A-2004/024154 in Gegenwart von erhöhten Salzkonzentrationen relativ stabil sind.

Im Falle von Hochleistungsfliesenklebern wird beispielsweise angestrebt, besonders kurze Aushärtungszeiten einzustellen, um eine frühe Begehbarkeit (ca. 5 Stunden) der verlegten Fliesen auch bei niedrigen Temperaturen (ca. 5°C) zu gewährleisten. Dies wird durch extrem hohe Dosierungen von Salzen erreicht, die als Beschleuniger wirken, beispielsweise Calciumformiat. Im Falle des Einsatzes derart hoher Salzfrachten (kritisch sind insbesondere zweiwertigen Kationen) büßen auch die Polymere gemäß US-A-2004/024154 einen Großteil ihrer Wirksamkeit ein.

Insoweit besteht eine gewisse Notwendigkeit, solche Hochleistungsfliesenkleber mit wasserlöslichen, nichtionischen Abkömmlingen von Polysacchariden, insbesondere Celluloseethern, als Wasserretentionsmitteln zu formulieren. Dies bedeutet jedoch eine Reihe von Nachteilen für den Anwender, was ursächlich darauf zurückzuführen ist, dass Celluloseether niedrige thermische Flockungspunkte aufweisen, was letztendlich bewirkt, dass das Wasserretentionsvermögen bei Temperaturen oberhalb von 30 °C drastisch schwächer wird. Celluloseether neigen darüber hinaus, insbesondere in höheren Dosierungen, zu hohen Klebrigkeiten, die nachteilhafterweise durch Zusatz von weiteren Formulierungskomponenten abgemildert werden müssen.

Neben den vorstehend beschriebenen anionischen Polymeren können auch kationische Copolymere eingesetzt werden:

Die US 5,601,725 beschreibt hydrophob modifizierte Copolymere von Diallyldimethylammoniumchlorid mit Dimethylaminoethylacrylat bzw. - methacrylat, die mit Benzyl- oder Cetylchlorid quarterniert worden sind. Die hydrophobe Gruppe ist somit im gleichen Monomerbaustein enthalten, der die kationische Ladung trägt. Dies ist auch bei den in der US 5,292,793 beschriebenen hydrophob modifizierten, wasserlöslichen kationischen Copolymeren der Fall. Es handelt sich um Copolymere aus Acrylamid mit einem kationischen Momoner, das sich von Dimethylaminoethylmethacrylat bzw. -methacrylat ableitet, das mit einem Alkylhalogenid (C₈ bis C₂₀) quarteniert wurde. In der US 5,071,934 werden hydrophob modifizierte Copolymere beschrieben, die als effiziente Verdickungsmittel für Wasser und Salzlösungen wirken. Es handelt sich um Copolymere von Acrylamid mit einem kationischen Momoner, das sich von Dimethylaminopropylmethacrylamid ableitet, das mit einem Alkylhalogenid (C₇ bis C₂₃) quarteniert wurde.

Allen aufgeführten kationischen Copolymeren ist gemeinsam, dass diese aufgrund der hydrophoben Alkylgruppe zwar in Wasser und in schwach salzhaltigen Lösungen einen Verdickungseffekt bewirken, in Baustoffsystemen mit hoher Salzfracht jedoch keine ausreichende Verdickung gewährleisten. Ebenfalls zeigen diese in Baustoffsystemen sowohl bei niedriger, als auch bei hoher Salzfracht unzureichende Wasserretentionseigenschaften.

Es ist bekannt, dass kationische Polyelektrolyte intensiv mit entgegengesetzt geladenen Tensiden wechselwirken. So werden in der US-A-2004/209780 kationisch modifizierte Polysaccharide und anionische Tenside als Zusatz zu Fracturing Fluids beschrieben. Hierbei wird der Effekt ausgenutzt, dass Polyelektrolyte stark mit entgegengesetzt geladenen Tensiden über elektrostatischen Anziehungskräfte wechselwirken. Zudem ergeben sich durch die so an das Polymer gebundenen hydrophoben Gruppen der Tenside assoziativ wirksame Verdickungseffekte. Die Wechselwirkungen werden noch komplexer, wenn auch das Polyelektrolyt über kovalent an die Hauptkette gebundene, hydrophobe Gruppen verfügt.

Allerdings zeigen diese hydrophob modifizierten kationischen Copolymere selbst in Kombination mit anionischen Tensiden in Baustoffsystemen keine ausreichende Verdickung und völlig unzureichende Wasserretentionseigenschaften.

Der vorliegenden Erfindung lag somit die Aufgabe zugrunde, Copolymere als Wasserretentionsmittel und Rheologiemodifizierer für wässrige Baustoffsysteme bereitzustellen, welche die genannten Nachteile selbst im Falle von hohen Salzfrachten nicht aufweisen.

Die Lösung dieser Aufgabe ist ein Copolymer aufweisend,
i) 5 bis 60 Mol-% einer Struktureinheit a),
ii) 20 bis 80 Mol-% einer Struktureinheit b) und
iii) 0,01 bis 3 Mol-% einer Struktureinheit c),
wobei die Struktureinheit a) durch folgende allgemeine Formel (I) repräsentiert wird: 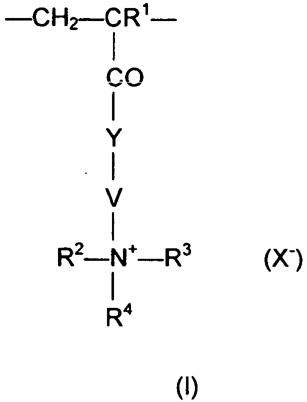 worin
- R¹: gleich oder verschieden ist (d.h. R¹ kann auch innerhalb eines Copolymers variieren)und durch Wasserstoff und/oder einen Methylrest repräsentiert wird,
- R² und R³: jeweils gleich oder verschieden sind und unabhängig voneinander jeweils durch Wasserstoff, einen aliphatischen Kohlenwasserstoffrest mit 1 bis 20 C-Atomen (verzweigt oder unverzweigt, bevorzugt Methyl-, Ethylrest), einen cycloaliphatischen Kohlenwasserstoffrest mit 5 bis 8 C-Atomen (insbesondere Cylohexylrest) und/oder einen Arylrest mit 6 bis 14 C-Atomen (insbesondere Phenylrest), repräsentiert werden,
- R⁴: gleich oder verschieden ist und durch einen mit R² oder R³ identischem Substituenten, -(CH₂)ₓ-SO₃Mₖ, 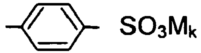 und/oder 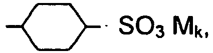 repräsentiert wird,
- M: gleich oder verschieden ist und durch ein ein- oder zweiwertiges Metallkation, Ammoniumkation (NH₄⁺) und/oder quarternäres Ammoniumkation (NR₁R₂R₃R₄)⁺,
- k: gleich oder verschieden ist und durch ½ und/oder 1 repräsentiert wird,
- Y: gleich oder verschieden ist und durch Sauerstoff, -NH und/oder - NR², repräsentiert wird,
- V: gleich oder verschieden ist und durch -(CH₂)ₓ-, , und/oder , repräsentiert wird,
- x: gleich oder verschieden ist und durch eine ganze Zahl von 1 bis 6 (bevorzugt 1 oder 2) repräsentiert wird,
- X: gleich oder verschieden ist und durch ein Halogenatom (bevorzugt Ci oder Br), C₁- bis C₄-Alkylsulfat (bevorzugt Methylsulfat) und/oder C₁-bis C₄-Alkylsulfonat (bevorzugt Methylsulfonat), repräsentiert wird,
die Struktureinheit b) durch folgende allgemeine Formeln (IIa) und/oder (IIb) repräsentiert wird: 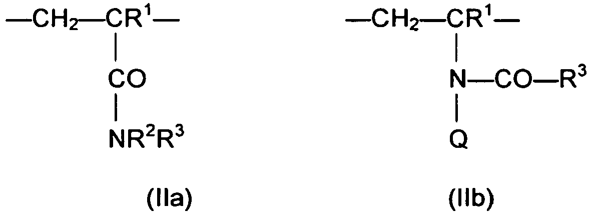 worin
- Q: gleich oder verschieden ist und durch Wasserstoff und/oder -CHR²R⁵ repräsentiert wird,
- R¹, R² und R³: jeweils mit der Maßgabe die vorstehend genannten Bedeutungen haben, dass im Falle von Q ungleich Wasserstoff R² und R³ in der allgemeinen Formel (IIb) zusammen für eine -CH₂-(CH₂)_{y}- Methylengruppe stehen können, so dass die allgemeine Formel (IIb) gemäß folgender Struktur vorliegt: 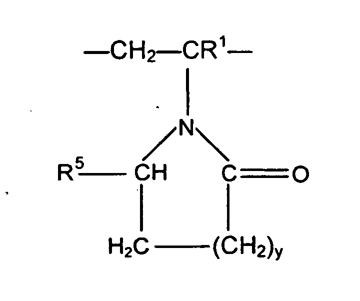
mit
- R5: gleich oder verschieden, sowie repräsentiert durch ein Wasserstoffatom, einen C₁- bis C₄-Alkylrest, eine Carbonsäuregruppe und/oder eine Carboxylatgruppe -COOMₖ, wobei y gleich oder verschieden ist und durch eine ganze Zahl von 1 bis 4 (bevorzugt 1 oder 2) repräsentiert wird, sowie M und k jeweils die vorstehend genannten Bedeutungen haben,
die Struktureinheit c) durch die allgemeinen Formel (III) repräsentiert wird: 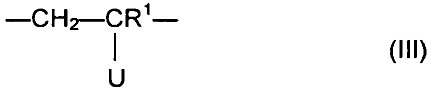 worin
- U: gleich oder verschieden ist und durch -COO(CₘH₂ₘO)ₙ-R⁶, und/oder -(CH₂)ₚ-O(CₘH₂ₘO)ₙ-R⁶ repräsentiert wird,
- m: gleich oder verschieden ist und durch eine ganze Zahl zwischen 2 und 4 (bevorzugt 1 oder 2) repräsentiert wird,
- n: gleich oder verschieden ist und durch eine ganze Zahl zwischen 1 und 200 (bevorzugt 1 bis 20) repräsentiert wird,
- p: gleich oder verschieden ist und durch eine ganze Zahl zwischen 0 und 20 (bevorzugt 1 bis 5) repräsentiert wird, R⁶ gleich oder verschieden ist und durch 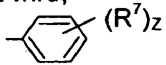 (im Falle von z=3: bevorzugt (R⁷)_{z} am Aromaten in den para- und ortho-Positionen) repräsentiert wird,
- R⁷: gleich oder verschieden ist und durch Wasserstoff, eine C₁- bis C₆-Alkylgruppe (unverzweigt oder verzweigt, bevorzugt Methyl- oder Ethylgruppe), und/oder eine Arylalkylgruppe mit C₁- bis C₁₂-Alkyl-(unverzeigt oder verzweigt, bevorzugt Methyl-, Ethyl-) sowie C₆- bis C₁₄-Arylrest (bevorzugt Styrylrest) repräsentiert wird,
- z: gleich oder verschieden ist und durch eine ganze Zahl zwischen 1 und 3 (bevorzugt 3) repräsentiert wird (z gibt an, wieviele R⁷ an dem Phenylrest gebunden sind)und
- R¹: die vorstehend genannte Bedeutung hat.

Mittels dieser erfindungsgemäßen Copolymere können auch im Falle von hohen Salzfrachten erhebliche Verbesserungen der Wasserretention in wässrigen Baustoffsystemen auf der Basis hydraulischer Bindemittel, wie Zement, Kalk, Gips, Anhydrit usw., erzielt werden. Die Rheologiemodifizierung, das Wasserrückhaltevermögen, die Klebrigkeit und das Verarbeitungsprofil lassen sich zudem je nach Zusammensetzung der Copolymere optimal für die jeweilige Anwendung einstellen.

Die für die Anwendung des erfindungsgemäßen Copolymers in wässrigen Baustoffanwendungen erforderliche gute Wasserlöslichkeit wird insbesondere durch die kationische Struktureinheit a) gewährleistet. Die neutrale Struktureinheit b) wird hauptsächlich für den Aufbau der Hauptkette und das Erreichen der geeigneten Kettenlängen benötigt, wobei durch die hydrophoben Struktureinheiten c) ein assoziative Verdickung ermöglicht wird, die für die angestrebten Produkteigenschaften vorteilhaft ist.

Bevorzugt geht die Struktureinheit a) aus der Polymerisation von ein oder mehreren der Monomerspezies [2-(Acryloyloxy)-ethyl]-trimethylammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammonium-chlorid bzw. -methosulfat, [3-(Acryloylamino)-propyl]-trimethylammoniumchlorid, [3-(Methacryloylamino)-propyl]-trimethylammoniumchlorid, N-(3-Sulfopropyl)-N-methyacryloxyethyl-N'-N-dimethyl-ammonium-betain, N-(3-Sulfopropyl)-N-methyacrylamidopropyl-N,N-dimethyl-ammonium-betain und/oder 1-(3-Sulfopropyl)-2-vinyl-pyridinium-betain, hervor.

Es ist prinzipiell praktikabel, bis zu ca. 15 Mol-% der Struktureinheiten a) durch weitere kationische Struktureinheiten zu ersetzten, die sich von N,N-Dimethyl-diallyl-ammoniumchlorid und N,N-Diethyl-diallyl-ammoniumchlorid ableiten.

In der Regel geht die Struktureinheit b) aus der Polymerisation von ein oder mehreren der Monomerspezies Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur (IIb) sind N-Methyl-N-vinylformamid, N-Methyl-N-vinylacetamid, N-Vinylpyrrolidon, N-Vinylcaprolactam und/oder N-Vinylpyrrolidon-5-carbonsäure, hervor.

Meist geht die Struktureinheit c) aus der Polymerisation von ein oder mehreren der Monomerspezies Tristyrylphenol-polyethylenglykol-1100-methacrylat, Tristyrylphenol-polyethylenglykol-1100-acrylat, Tristyrylphenol-polyethenglykol-1100-monovinylether, Tristyrylphenol-polyethylenglykol-1100-vinyloxy-butylether und/oder Tristyrylphenol-polyethylenglykol-block-propylenglykolallylether, hervor.

In einer bevorzugten Ausführungsform der Erfindung sind die Struktureinheiten a) mit 15 bis 50 Mol-%, b) mit 30 bis 75 Mol-% und c) mit 0,03 bis 1 Mol-% in dem Copolymer enthalten.

Meist enthält das vorstehend beschriebene Copolymer noch bis zu 5 Mol-%, bevorzugt 0,05 bis 3 Mol-% einer Struktureinheit d), welche durch die allgemeine Formel (IV) repräsentiert wird: 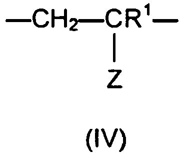 worin
- Z: gleich oder verschieden ist und durch -COO(CₘH₂ₘO)ₙ-R⁸ und/oder -(CH₂)ₚ-O(CₘH₂ₘO)ₙ-R⁸, repräsentiert wird,
- R⁸: gleich oder verschieden ist und durch Wasserstoff und/oder C₁- bis C₄-Alkyl (verzweigt oder unverzweigt, bevorzugt Methyl-, Ethyl-) repräsentiert wird, sowie
- R¹, m, n und p: die jeweils vorstehend genannten Bedeutungen haben.

In der Regel geht die Struktureinheit d) aus der Polymerisation ein oder mehrerer der folgenden Monomerspezies Allylpolyethylenglykol-(350 bis 2000), Methylpolyethylenglykol-(350 bis 3000)-monovinylether, Polyethylenglykol-(500 bis 5000)-vinyloxy-butylether, Polyethylenglykol-block-propylenglykol-(500 bis 5000)-vinyloxy-butylether, Methylpolyethylenglykol-block-propylenglykolallylether, Methylpolyethylenglykol-750-methacrylat, Polyethylenglykol-500-methacrylat, Methylpolyethylenglykol-2000-monovinylether und/oder Methylpolyethylenglykol-block-propylenglykolallylether, hervor.

Erfindungsgemäße Copolymere, welche die Struktureinheit d) enthalten, verleihen dem Baustoff eine nochmals verbesserte Cremigkeit, was vorteilhaft für den Verarbeiter ist.

Häufig enthält das erfindungsgemäße Copolymer bis zu 40 Mol-%, bevorzugt 0,1 bis 30 Mol-%, einer Struktureinheit e), welche durch die allgemeine Formel (V) repräsentiert wird: 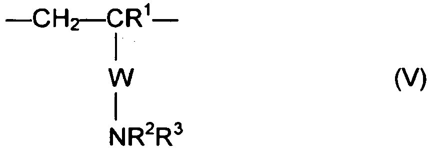 worin
- W: gleich oder verschieden ist und durch -CO-O-(CH₂)ₓ- und/oder -CO-NR²-(CH₂)ₓ- repräsentiert wird, sowie

R¹, R², R³ und x jeweils die vorstehend genannten Bedeutungen haben. Normalerweise geht die Struktureinheit e) aus der Polymerisation ein oder mehrerer der folgenden Monomerspezies [3-(Methacryloylamino)-propyl]-dimethylamin, [3-(Acryloylamino)-propyl]-dimethylamin, [2-(Methacryloyl-oxy)-ethyl]-dimethylamin, [2-(Acryloyl-oxy)-ethyl]-dimethylamin, [2-(Methacryloyl-oxy)-ethyl]-diethylamin und/oder [2-(Acryloyl-oxy)-ethyl]-diethylamin, hervor.

Durch Einbau der Struktureinheit e) wird die Luftporenstabilität der erhaltenen Copolymere verbessert.

Vielfach enthält das erfindungsgemäße Copolymer noch bis zu 20 Mol-%, bevorzugt 0,1 bis 10 Mol-%, einer Struktureinheit f), welche durch die allgemeine Formel (VI) repräsentiert wird: 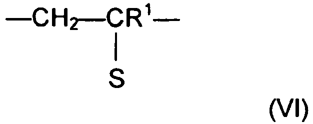 worin
- S: gleich oder verschieden ist und durch -COOMₖ repräsentiert wird, sowie
- M, k und R¹: jeweils die vorstehend genannten Bedeutungen haben.

In der Regel geht die Struktureinheit f) aus der Polymerisation ein oder mehrerer der folgenden Monomerspezies Acrylsäure, Natriumacrylat, Methacrylsäure und/oder Natriummethacrylat, hervor.

Copolymere, welche die Struktureinheit f) enthalten, zeigen Vorteile in Baustoffsystemen, in denen besonders geringe Mischzeiten notwendig sind.

Die Anzahl der sich wiederholenden Strukturelemente in dem erfindungsgemäßen Copolymer ist nicht eingeschränkt und hängt stark vom jeweiligen Anwendungsgebiet ab. Es hat sich allerdings als vorteilhaft erwiesen, die Anzahl der Struktureinheiten so einzustellen, dass die Copolymere ein zahlenmittleres Molekulargewicht von 50.000 bis 20.000 000 aufweisen.

Das erfindungsgemäße Copolymer kann durch den Einbau von kleinen Mengen Vernetzer eine leicht verzweigte und/ oder leicht vernetzte Struktur erhalten. Beispiele für solche Vernetzer-Komponenten sind Triallylamin, Triallylmethylammoniumchlorid, Tetraallylammoniumchlorid, N,N'-Methylenbisacrylamid, Triethylenglykolbismethacrylat, Triethylenglykolbisacrylat, Polyethylenglykol(400)-bismethacrylat und Polyethylenglykol(400)-bisacrylat. Diese Verbindungen sollten nur in solchen Mengen eingesetzt werden, dass immer noch wasserlösliche Copolymere erhalten werden. Generell wird die Konzentration selten über 0,1 Mol-% bezogen auf die Summen der Struktureinheiten a) bis f) liegen - ein Fachmann kann jedoch leicht die maximal einsetzbare Menge Vernetzerkomponente bestimmen.

Die Herstellung der erfindungsgemäßen Copolymere erfolgt in an sich bekannter Weise durch Verknüpfung der die Struktureinheiten a) bis f) (d) bis f) jeweils optional) bildenden Monomere durch radikalische Polymerisation. Da es sich bei den erfindungsgemäßen Produkten um wasserlösliche Copolymere handelt, ist die Polymerisation in wässriger Phase, die Polymerisation in umgekehrter Emulsion bzw. die Polymerisation in inverser Suspension bevorzugt. Zweckmäßigerweise erfolgt die Herstellung durch Gelpolymerisation in wässriger Phase.

Im Falle der bevorzugten Gelpolymerisation ist es vorteilhaft, wenn bei niedrigen Reaktionstemperaturen und mit einem geeigneten Initiatorsystems polymerisiert wird. Durch die Kombination zweier Initiatorsysteme (Azoinitiatoren und Redoxsystem), die zuerst photochemisch bei niedrigen Temperaturen und anschließend aufgrund der Exothermie der Polymerisation thermisch gestartet werden, kann ein Umsatz von ≥ 99 % erreicht werden. Sonstige Hilfsmittel, wie Molekulargewichtsregler, z. B. Thioglykolsäure, Mercaptoethanol, Ameisensäure und Natriumhypophosphit können ebenfalls verwendet werden. Die Gelpolymerisation erfolgt vorzugsweise bei - 5 bis 50 °C, wobei die Konzentration der wässrigen Lösung bevorzugt auf 25 bis 70 Gew.-% eingestellt wird. Zur Durchführung der Polymerisation werden zweckmäßigerweise die erfindungsgemäß zu verwendenden Monomere in wässriger Lösung mit Puffern, Molekulargewichtsreglern und anderen Polymerisationshilfsmitteln vermischt. Nach Einstellung des PolymerisationspH-Wertes, der vorzugsweise zwischen 4 und 9 liegt, erfolgt eine Spülung des Gemisches mit einem Schutzgas wie Helium oder Stickstoff und anschließend die Aufheizung oder Abkühlung auf die entsprechende Polymerisationstemperatur. Wird in Form einer ungerührten Gelpolymerisation verfahren, so wird in bevorzugten Schichtdicken von 2 bis 20 cm, insbesondere 8 bis 10 cm bei adiabatischen Reaktionsbedingungen polymerisiert. Die Polymerisation wird durch Zugabe des Polymerisationsinitiators und durch Bestrahlung mit UV-Licht bei niedrigen Temperaturen (zwischen - 5 und 10 °C) gestartet. Das Polymer wird nach vollständigem Umsatz der Monomere unter Einsatz eines Trennmittels (z. B. Sitren^{®} 595 der Goldschmidt GmbH) zerkleinert, um durch eine größere Oberfläche das Trocknen zu beschleunigen. Durch möglichst schonenden Reaktions- und Trocknungsbedingungen können vernetzende Nebenreaktionen vermieden werden, so dass Polymere erhalten werden, die einen geringen Gelanteil aufweisen.

Die bevorzugten Einsatzmengen der erfindungsgemäßen Copolymere liegen in Abhängigkeit von der Verwendungsart zwischen 0,005 und 5 Gew.-% bezogen auf das Trockengewicht des Baustoffsystems.

Die getrockneten Copolymere werden in Pulverform für Trockenmörtelanwendungen (z. B. Fliesenkleber) ihrer erfindungsgemäßen Verwendung zugeführt. Dabei ist die Größenverteilung der Teilchen durch Anpassung der Mahlparameter möglichst so zu wählen, dass der mittlere Teilchendurchmesser kleiner 100 µm (Bestimmung gemäß DIN 66162) ist und der Anteil an Partikeln mit einem Teilchendurchmesser größer 200 µm kleiner als 2 Gew.-% (Bestimmung gemäß DIN 66162) ist. Bevorzugt sind solche Pulver, deren mittlerer Teilchendurchmesser kleiner 60 µm ist und der Anteil an Partikeln mit einem Teilchendurchmesser größer 120 µm kleiner als 2 Gew.-% ist. Besonders bevorzugt sind solche Pulver, deren mittlerer Teilchendurchmesser kleiner 50 µm ist und der Anteil an Partikeln mit einem Teilchendurchmesser größer 100 µm kleiner als 2 Gew.-% ist.

Das erfindungsgemäße Copolymers findet Verwendung als Zusatzmittel für wässrige Baustoffsysteme, die hydraulische Bindemittel, insbesondere Zement, Kalk, Gips oder Anhydrit, enthalten.

Bevorzugt liegen die hydraulischen Bindemittel als Trockenmörtelkomposition, insbesondere als Fliesenkleber oder Gipsputz, vor.

Eine nochmalige Verbesserung der besagten Eigenschaften lässt sich dadurch erreichen, wenn das erfindungsgemäße Copolymer zusammen mit einem anionischen Tensid als Mischung eingesetzt wird.

Die Erfindung sieht somit außerdem eine polymere Mischung vor, enthaltend
α) das erfindugsgemäße Copolymer und
β) ein anionisches Tensid, welches durch die allgemeine Formeln

   (VII) J-K

   oder

   (VIII) T-B-K

   repräsentiert wird,
wobei J und T jeweils den hydrophoben Teil des Tensids darstellt, K eine anionische funktionelle Gruppe ist, T einen hydrophoben Teil des Tensids darstellt und B eine Spacer-Gruppe ist, wobei
- J: durch einen aliphatischen Kohlenwasserstoffrest mit 8 bis 30 C-Atomen (verzweigt oder unverzweigt, bevorzugt 8 bis 12 C-Atome), einen cycloaliphatischen Kohlenwasserstoffrest mit 5 bis 8 C-Atomen (insbesondere Cylohexyl-) oder einen Arylrest mit 6 bis 14 C-Atomen (insbesondere Phenyl) repräsentiert wird,
- K: durch -SO₃Mₖ, -OSO₃Mₖ, -COOMₖ, oder -OP(O)(OH)OMₖ repräsentiert wird,
- M und k: jeweils die vorstehend genannte Bedeutung haben,
- T: durch einen aliphatischen Kohlenwasserstoffrest mit 8 bis 30 C-Atomen (verzweigt oder unverzweigt, bevorzugt 8 bis 12 C-Atome), einen cycloaliphatischen Kohlenwasserstoffrest mit 5 bis 8 C-Atomen (insbesondere Cylohexyl), einen Arylrest mit 6 bis 14 C-Atomen (insbesondere Phenyl) oder R⁶, repräsentiert wird,
- B: durch -O(CₘH₂ₘO)ₙ- repräsentiert wird, sowie
- K, R⁶, m und n: jeweils die vorstehend genannten Bedeutungen haben.

Bevorzugt weist die polymere Mischung 80 bis 99 Gew. % des erfindungsgemäßen Copolymers und 1 bis 20 Gew. % des vorstehend beschriebenen anionischen Tensids auf.

Das anionische Tensid gemäß der allgemeinen Formel (VII) liegt normalerweise als Alkylsulfonat, Arylsulfonat, Alphaolefinsulfonat, Alkysphosphat oder als Fettsäuresalz und das anionische Tensid der allgemeinen Formel (VIII) meist als Alkylethersulfat vor.

Es können ebenfalls Mischungen aus den aufgeführten Verbindungsklassen der anionischen Tenside eingesetzt werden.

Die erfindungsgemäße polymere Mischung weist praktisch das gleiche Anwendungsprofil wie das erfindungsgemäße Copolymer auf und wird bevorzugt als Zusatzmittel für wässrige Baustoffsysteme, die hydraulische Bindemittel enthalten, eingesetzt.

Die erfindungsgemäßen Copolymere und polymeren Mischungen können jeweils auch in Kombination mit nichtionischen Polysaccharid-Derivaten, wie Methylcellulose (MC), Hydroxyethylcellulose (HEC), Hydroxypropylcellulose (HPC), Methylhydroxyethylcellulose (MHEC), Methylhydroxypropylcellulose (MHPC), sowie Welan Gum und/oder Diutan Gum, eingesetzt werden.

Die nachstehenden Beispiele sollen die Erfindung näher erläutern.

### Copolymer 1 (Gelpolymerisation)

In einem 2 1-Dreihalskolben mit Rührer und Thermometer wurden 296 g Wasser vorgelegt. Anschließend wurden nacheinander 319 g (0,92 mol, 26,8 Mol-%) [3-(Acryloylamino)-propyl]-trimethylammoniumchlorid (60 Gew.-%ige Lösung in Wasser) (I), 355 g (2,5 mol, 73 Mol-%) Acrylamid (50 Gew.-%ige Lösung in Wasser) (II) und 19 g (0,0068 mol, 0,2 Mol-% Tristyrylphenol-polyethylenglykol-1100-methacrylat (60 Gew.-%ige Lösung in Wasser) (III) zugesetzt. Als Molekulargewichtsregler wurden 50 ppm Ameisensäure zugegeben. Die Lösung wurde mit 20 %iger Natronlauge auf pH = 7 eingestellt, durch 30 minütiges Spülen mit Stickstoff inertisiert und auf ca. 5 °C abgekühlt. Die Lösung wurde in einen Plastikbehälter mit den Maßen (b*t*h) 15 cm *10cm *20 cm umgefüllt und anschließend wurden nacheinander 150 mg 2,2'-Azo-bis-(2-amidinopropan)-dihydrochlorid, 1,0 g 1 %ige Rongalit C-Lösung und 10 g 0,1 %ige tert.-Butylhydroperoxid-Lösung zugesetzt. Die Polymerisation wurde durch Bestrahlen mit UV-Licht (zwei Philips Röhren; Cleo Performance 40 W) gestartet. Nach ca. 2 h wurde das harte Gel aus dem Plastikbehälter genommen und mit einer Schere in ca. 5 cm* 5 cm* 5 cm große Gelwürfel geschnitten. Bevor die Gelwürfel mittels eines herkömmlichen Fleischwolfs zerkleinert wurden, wurden sie mit dem Trennmittel Sitren 595 (Polydimethylsiloxan-Emulsion; Firma Goldschmidt) eingestrichen. Bei dem Trennmittel handelt es sich um eine Polydimethylsiloxanemulsion, die 1 : 20 mit Wasser verdünnt wurde.

Das erhaltene Gelgranulat von Copolymer 1 wurde gleichmäßig auf Trockengitter verteilt und in einem Umlufttrockenschrank bei ca. 90 - 120 °C im Vakuum bis zur Gewichtskonstanz getrocknet.

Es wurden ca. 375 g eines weißen, harten Granulats erhalten, welches mit Hilfe einer Zentrifugalmühle in einen pulverigen Zustand überführt wurde. Der mittlere Teilchendurchmesser des Polymerpulvers von Copolymer 1 betrug 40 µm und der Anteil an Partikeln mit einem Teilchendurchmesser größer 100 µm war kleiner als 1 Gew.-%.

### Copolymer 2

Entsprechend Copolymer 1 wurde Copolymer 2 aus 48 Mol-% [3-(Acryloylamino)-propyl]-trimethylammoniumchlorid (I), 51,4 Mol-% Acrylamid (II), 0,3 Mol-% Tristyrylphenol-polyethylenglykol-1100-methacrylat (III)und 0,3 Mol-% Polyethylenglykol-(2000)-vinyloxy-butylether (IV) hergestellt. Als Molekulargewichtsregler wurden 80 ppm Ameisensäure zugegeben.

### Copolymer 3

Entsprechend Copolymer 1 wurde Copolymer 3 aus 38 Mol-% [3-(Methacryloylamino)-propyl]-trimethylammoniumchlorid (I), 61 Mol-% Acrylamid (II), 0,3 Mol-% Tristyrylphenol-polyethylenglykol-1100-methacrylat (III) und 0,7 Mol-% Methylpolyethylenglykol-(3000)-monovinylether (IV) hergestellt. Als Molekulargewichtsregler wurden 200 ppm Ameisensäure zugegeben.

### Copolymer 4

Entsprechend Copolymer 1 wurde Copolymer 4 aus 26 Mol-% [2-(Methacryloyloxy)-ethyl]-trimethylammonium-chlorid (I), 65 Mol-% Acrylamid (II), 0,2 Mol-% Tristyrylphenol-polyethylenglykol-1100-methacrylat (III) und 8,8 Mol-% [2-(Methacryloyl-oxy)-ethyl]-diethylamin (V) hergestellt. Als Molekulargewichtsregler wurden 80 ppm Ameisensäure zugegeben.

### Copolymer 5

Entsprechend Copolymer 1 wurde Copolymer 5 aus 16 Mol-% [3-(Acryloylamino)-propyl]-trimethylammoniumchlorid (I), 56,8 Mol-% Acrylamid (II), 0,2 Mol-% Tristyrylphenol-polyethylenglykol-1100-methacrylat (III) und 27 Mol-% [3-(Acryloylamino)-propyl]-dimethylamin (V) hergestellt. Als Molekulargewichtsregler wurden 40 ppm Ameisensäure zugegeben.

### Copolymer 6

Entsprechend Copolymer 1 wurde Copolymer 6 aus 27 Mol-% [3-(Methacryloylamino)-propyl]-trimethylammoniumchlorid (I), 55,6 Mol-% Acrylamid (II), 0,2 Mol-% Tristyrylphenol-polyethylenglykol-1100-methacrylat (III), 0,2 Mol-% Polyethylenglykol-block-propylenglykol-(1100)-vinyloxy-butylether (IV) und 17 Mol-% [3-(Methacryloylamino)-propyl]-dimethylamin (V) hergestellt. Als Molekulargewichtsregler wurden 40 ppm Ameisensäure zugegeben.

### Copolymer 7

Entsprechend Copolymer 1 wurde Copolymer 7 aus 45,4 Mol-% [3-(Acryloylamino)-propyl]-trimethylammoniumchlorid (I), 48 Mol-% Acrylamid (II), 0,3 Mol-% Tristyrylphenol-polyethylenglykol-1100-methacrylat (III), 0,3 Mol-% Polyethylenglykol-block-propylenglykol-(3000)-vinyloxy-butylether (IV) und 6 Mol-% Acrylsäure (VI) hergestellt. Als Molekulargewichtsregler wurden 70 ppm Ameisensäure zugegeben.

### Copolymer 8

Entsprechend Copolymer 1 wurde Copolymer 8 aus 28 Mol-% [2-(Methacryloyloxy)-ethyl]-trimethylammonium-chlorid (I), 46,7 Mol-% N,N-Dimethylacrylamid (II), 0,3 Mol-% Tristyrylphenol-polyethylenglykol-1100-methacrylat (III), 21 Mol-% [3-(Acryloylamino)-propyl]-dimethylamin (V) und 4 Mol-% Acrylsäure (VI) hergestellt. Als Molekulargewichtsregler wurden 30 ppm Ameisensäure zugegeben.

### Copolymer 9

Entsprechend Copolymer 1 wurde Copolymer 9 aus 25 Mol-% [2-(Methacryloyloxy)-ethyl]-trimethylammonium-chlorid (I), 57 Mol-% Acrylamid (II), 0,2 Mol-% Tristyrylphenol-polyethylenglykol-1100-methacrylat (III), 0,2 Mol-% Polyethylenglykol-block-propylenglykol-(2000)-vinyloxy-butylether (IV), 12 Mol-% [3-(Acryloylamino)-propyl]-dimethylamin (V) und 5,6 Mol-% Acrylsäure (VI) hergestellt. Als Molekulargewichtsregler wurden 30 ppm Ameisensäure zugegeben.

### Polymere Mischung 1

Bestehend aus 95 Gew.-% Copolymer 3 und 5 Gew.-% C₁₄/C₁₆-Alphaolefinsulfonat Natriumsalz (VII) (Hostapur OSB der Fa. SE Tylose GmbH & Co. KG).

### Polymere Mischung 2

Bestehend aus 85 Gew.-% Copolymer 9 und 15 Gew.-% Natriumlaurylsulfat (VII) (Handelsprodukt der Fa. F.B. Silbermann GmbH & Co. KG).

### Vergleichspolymer 1 /Vergleichsbeispiel 1

Gemäß US 5,292,793 wurde Vergleichspolymer 2 aus 20 Mol-% [2-(Methacryloyloxy)-ethyl]-dimethyl-cetyl-ammonium-bromid und 80 Mol-% Acrylamid hergestellt.

### Vergleichspolymer 2 /Vergleichsbeispiel 2

Gemäß US-A-2004/024154 wurde Vergleichspolymer 3 aus 47,1 Mol-% 2-Acrylamido-2-methylpropansulfonsäure, 49,1 Mol-% Acrylamid, 0,7 Mol-% Tristyrylphenol-polyethylenglykol-1100-methacrylat und 3,1 Mol-% 2-(Methacrylamido)-propyl]-trimethylammonium-chlorid hergestellt.

### Anwendungsbeispiele

Die anwendungstechnische Beurteilung der erfindungsgemäßen Copolymere und polymeren Mischungen erfolgte anhand von Testmischungen aus dem Bereich standfester Fliesenklebemörtel und Gipsputze.

### - Fliesenklebemörtel:

Hierzu wurde praxisnah unter Einsatz einer gebrauchsfertig formulierten Trockenmischung geprüft, der die erfindungsgemäßen Copolymere bzw. die Vergleichspolymere in fester Form zugemischt wurden. Im Anschluss an die Trockenvermischung wurde eine bestimmte Wassermenge zugegeben und mittels einer Bohrmaschine mit G3 Mischer intensiv verrührt (Dauer 2*15 Sekunden). Nach einer Reifezeit von 5 min wurde der Fliesenklebemörtel einer ersten visuellen Prüfung unterzogen.

### Bestimmung des Ausbreitmaßes

Die Bestimmung des Ausbreitmaßes erfolgte nach der Reifezeit und ein zweites mal 30 min nach dem Anrühren (nach kurzem Aufrühren mit der Hand) gemäß DIN 18555, Teil 2.

### Bestimmung der Wasserretention

Die Wasserretention wurde ca. 15 min nach dem Anrühren gemäß DIN 18555, Teil 7 ermittelt.

### Bestimmung der Klebrigkeit / Leichtgängigkeit

Die Bestimmung der Klebrigkeit bzw. Leichtgängigkeit der Testmischung erfolgt durch einen qualifizierten Fachmann.

### Bestimmung des Abrutschens

Das Abrutschen wurde ca. 3 min nach dem Anrühren gemäß DIN EN 1308 ermittelt. Angegeben wird die Wegstrecke des Abrutschens in mm.

### Bestimmung der Entfaltungszeit

Die Entfaltungszeit wurde beim Anmischen mit einem Rilem-Mischer (Stufe I) durch einen Fachmann mit Stoppuhr durch visuelle Beurteilung bestimmt.

### Bestimmung der Benetzung der Fliesen

Die Fliesenkleberformulierung wurde auf einer Betonplatte gemäß EN 1323 appliziert und nach 10 Minuten eine Fliese (5 x 5 cm) aufgelegt, die für 30 Sekunden mit einem Gewicht von 2 kg belastet wurde. Nach weiteren 60 Minuten wurde die Fliese abgenommen und es wurde ermittelt, zu welchem Prozentsatz die Fliesenrückseite noch mit Kleber behaftet war.

Die Zusammensetzung des Fliesenklebemörtels ist Tabelle 1 zu entnehmen.

**Tabelle 1**

| | |
|---|---|
| Zusammensetzung der Testmischung (in Gew.-%) | |

| Komponente | Menge (Gew.-%) |
|---|---|
| Zement ¹⁾ | 37,50 |
| Quarzsand (0,05 - 0,4 mm) | 49,50 |
| Kalksteinmehl ²⁾ | 5,50 |
| Dispersionspulver ³⁾ | 3,50 |
| Cellulosefasern ⁴⁾ | 0,50 |
| Calciumformiat | 2,80 |
| Copolymere / Vergleichsbeispiele | 0,50 |
| Stärkeether ⁵⁾ | 0,15 |
| Polyacrylamid ⁶⁾ | 0,05 |

| | |
|---|---|
| ¹⁾ CEM II 42,5 R ²⁾ Omyacarb 130 AL (Fa. Omya, Oftingen, Schweiz) ³⁾ Vinnapas RE 530 Z (Wacker Chemie AG, München) ⁴⁾ Arbocel ZZC 500 (J. Rettenmaier & Söhne GmbH + Co., Rosenberg) ⁵⁾ Eloset 5400 (Fa. Elotex, Sempach, Schweiz) ⁶⁾ Floset 130 U DP (Fa. SNF Floerger, Andrézieux Cedex, Frankreich) | |

Der Fliesenklebemörtel ist ähnlich einem C2FTE Fliesenklebemörtel (nach DIN EN 12004) mit 2,80 Gew.-% Calciumformiat als Beschleuniger formuliert.

Die mit den erfindungsgemäßen Copolymeren, polymeren Mischungen und den Vergleichsbeispielen erhaltenen Testergebnisse sind in Tabelle 2 dargestellt.

**Tabelle 2**

| Verarbeitungseigenschaften eines Klebemörtels für Keramikfliesen, der mit erfindungsgemäßen Abmischungen und entsprechenden Mischungen gemäß Vergleichsbeispielen modifiziert wurde. | | | | | | | | |
|---|---|---|---|---|---|---|---|---|
| Zusatzmittel | Ausbreitmaß (cm) | Ausbreitmaß 30 min (cm) | Wasserretention (%) | Einrührzeit (s) | Benetzung (%) | Klebrigkeit | Abrutschen (mm) | Luftporenstabilität |
| Copolymer 1 | 18,2 | 17,2 | 98,8 | 15 | 81 | mittel | 2 | mittel |
| Copolymer 2 | 17,2 | 16,8 | 98,7 | 19 | 82 | gering | 3 | gut |
| Copolymer 3 | 17,6 | 17,3 | 98,4 | 17 | 82 | gering | 5 | gut |
| Copolymer 4 | 18,2 | 17,7 | 98,8 | 16 | 80 | gering | 2 | sehr gut |
| Copolymer 5 | 18,8 | 17,7 | 98,2 | 10 | 89 | gering | 4 | sehr gut |
| Copolymer 6 | 18,0 | 17,8 | 98,7 | 15 | 85 | gering | 6 | sehr gut |
| Copolymer 7 | 17,2 | 16,6 | 98,9 | 14 | 90 | sehr gering | 2 | gut |
| Copolymer 8 | 17,0 | 16,5 | 98,5 | 13 | 80 | sehr gering | 2 | sehr gut |
| Copolymer 9 | 17,5 | 16,8 | 98,5 | 13 | 80 | sehr gering | 2 | sehr gut |
| Polymere Mischung 1 | 17,9 | 17,8 | 98,9 | 14 | 86 | sehr gering | 0 | sehr gut |
| Polymere Mischung 2 | 17,6 | 17,7 | 99,0 | 11 | 88 | sehr gering | 0 | sehr gut |
| Vergleichsbeispiel 1 | 19,4 | 18,4 | 96,0 | 8 | 78 | mittel | > 20 | schlecht |
| Vergleichsbeispiel 2 | 17,5 | 16,9 | 97,2 | 10 | 80 | mittel | 2 | sehr gut |
| Celluloseether MHPC 30000 ¹⁾ | 16,2 | 16,2 | 98,6 | 6 | 70 | sehr hoch | 8 | gut |

| | | | | | | | | |
|---|---|---|---|---|---|---|---|---|
| ¹⁾ Mecellose PMC 30 U(S) der Fa. Samsung Fine Chemicals. Seoul, Südkorea Wassermenge: 330 g Klebemörtel: 1.000 g | | | | | | | | |

Die Testergebnisse in Tabelle 2 zeigen, dass die erfindungsgemäßen Copolymere deutlich bessere Wasserretentionswerte, geringere Klebrigkeiten und eine deutlich verminderte Zähigkeit beim Verarbeiten in dem Fliesenklebemörtel aufweisen als diejenigen gemäß der Vergleichsbeispiele 1 und 2. Letztere zeigen bei der hohen Konzentration an löslichen Caiciumionen einen erheblichen Einbruch in der Wasserrückhaltung. Die erfindungsgemäßen Copolymere hingegen zeigen auch bei dem hohen Calciumgehalt eine besonders gute Wasserrückhaltung. Der als Vergleich getestete Celluloseether verleiht dem Fliesenklebemörtel bei hohen Calciumfrachten zwar gute Wasserrückhaltung, jedoch einhergehend mit einer unerwünscht hohen Klebrigkeit, die nachteilig für den Verarbeiter ist.

Die Benetzung der Fliese mit den erfindungsgemäßen Copolymeren ist tendenziell besser als mit den Vergleichspolymeren 1 und 2. Markant sind die Unterschiede der erfindungsgemäßen Copolymere bezüglich der Leichgängigkeit und Klebrigkeit bei der Verarbeitung des Fliesenklebemörtels. Vor allem Copolymere 7, 8 und 9 zeigen eine ausgeprägt geringe Klebrigkeit und eine damit einhergehende Leichtgängigkeit bei der Verarbeitung des Fliesenklebemörtels. Die angenehme und einfache Verarbeitbarkeit führt zu einer deutlichen Reduzierung des Kraftaufwandes beim Verteilen des Fliesenklebemörtels und zu einer Vereinfachung der einzelnen Arbeitschritte. Die Spezies gemäß der Vergleichsbeispiele 1 und 2 zeigen eine im Vergleich zum Celluloseether deutlich geringere Klebrigkeit und verbesserte Leichtgängigkeit - sind jedoch den erfindungsgemäßen Copolymeren unterlegen.

Bei der Beurteilung des Abrutschens gemäß DIN EN 1308 liegen alle erfindungsgemäßen Copolymere und Vergleichspolymer 2 auf ähnlichem hohem Niveau. Das beste Standvermögen zeigen jedoch die polymeren Mischungen, mit denen sich das Abrutschen vollkommen verhindern lässt. Dabei zeigen die Fliesenklebemörtel mit den polymeren Mischungen ebenfalls besonders gute Leichtgängigkeit, geringer Klebrigkeit und exzellentes Wasserrückhaltevermögen.

Alle erfindungsgemäßen Copolymere zeigen ein hohes Niveau bezüglich Luftporenstabilität. Dabei zeichnen sich die Copolymere 4, 5, 6, 8 und 9, die jeweils die Struktureinheit e) enthalten, durch besonders gute Luftporenstabilität aus.

### - Gipsputz zur manuellen Applizierung

Hierzu wurden praxisnah unter Einsatz einer gebrauchsfertig formulierten Trockenmischung geprüft, welcher die erfindungsgemäßen Copolymere bzw. die Vergleichsprodukte in fester Form zugemischt wurden. Im Anschluss an die Trockenhomogenisierung wurde die Testmischung in eine definierte Wassermenge innerhalb von 15 Sekunden zugegeben, vorsichtig mit der Kelle verrührt und anschließend mit einem Rilem-Mischer (Stufe I) intensiv nachgerührt (Dauer 60 Sekunden). Hierauf ließ man die Mischung 3 Minuten reifen und rührte erneut unter obigen Bedingungen 15 Sekunden auf.

### Bestimmung der Entfaltungszeit

Die Entfaltungszeit beim Anmischen mit einem Rilem-Mischer (Stufe I) wurde subjektiv durch einen Fachmann mit Stoppuhr durch visuelle Beurteilung bestimmt.

### Bestimmung der Wasserretention

Die Wasserretention wurde nach der Reifezeit gemäß DIN 18555, Teil 7 ermittelt.

### Bestimmung der Luftporenstabilität

Die Luftporenstabilität wurde qualitativ durch visuelle Beurteilung bestimmt.

### Bestimmung der Klebrigkeit / Leichtgängigkeit

Die Bestimmung der Klebrigkeit bzw. Leichtgängigkeit der Testmischung erfolgte durch einen qualifizierten Fachmann.

### Bestimmung des Standvermögens

Die Bestimmung des Standvermögens einer nach der Reifezeit frisch applizierten 20 mm dicken Putzschicht erfolgte durch einen qualifizierten Fachmann.

### Bestimmung der Knötchenlast

Die Bestimmung des Knötchengehaltes erfolgte nach der Reifezeit durch visuelle und manuelle Betrachtung durch einen qualifizierten Fachmann.

Die Zusammensetzung des Gipsputzes ist aus Tabelle 3 zu entnehmen.

**Tabelle 3:**

| Zusammensetzung der Testmischung (in Gew.-%) | |
|---|---|
| Komponente | Menge (Gew.-%) |
| Calciumsulfat beta-Halbhydrat | 45,0 |
| Gelöschter Kalk | 5,20 |
| Kalksteinmehl (<0,1 mm) | 1,1 |
| Kalksteinsand (0,1-1 mm) | 47,2 |
| Perlite (0 - 1 mm) | 1,1 |
| Copolymere / Vergleichsbeispiele | 0,3 |
| Luftporenbildner ¹⁾ | 0,03 |
| Weinsäure (Verzögerer) | 0,07 |

| | |
|---|---|
| ¹⁾ Genapol PF 80 p (Clariant GmbH, Frankfurt/Main) | |

**Tabelle 4**

| Verarbeitungseigenschaften eines Gipsputzes zur manuellen Applikation, der mit erfindungsgemäßen Abmischungen und entsprechenden Vergleichsmischungen modifiziert wurde. | | | | | | |
|---|---|---|---|---|---|---|
| Zusatzmittel | Knötchenzahl | Wasserretention (%) | Einrührzeit (s) | Klebrigkeit | Standvermögen | Luftporenstabilität |
| Copolymer 1 | gering | 98,3 | 20 | mittel | hoch | gut |
| Copolymer 2 | gering | 98,2 | 24 | gering | hoch-mittel | gut |
| Copolymer 3 | gering | 97,4 | 21 | sehr gering | mittel | gut |
| Copolymer 4 | gering | 98,3 | 21 | gering | hoch | sehr gut |
| Copolymer 5 | gering | 97,6 | 15 | gering | hoch-mittel | sehr gut |
| Copolymer 6 | gering | 98,2 | 20 | gering | mittel | sehr gut |
| Copolymer 7 | sehr gering | 98,3 | 17 | sehr gering | hoch | gut |
| Copolymer 8 | gering | 98,0 | 18 | sehr gering | hoch | sehr gut |
| Copolymer 9 | sehr gering | 98,0 | 18 | sehr gering | hoch | sehr gut |
| Polymere Mischung 1 | sehr gering | 98,4 | 19 | sehr gering | sehr hoch | sehr gut |
| Polymere Mischung 2 | sehr gering | 98,6 | 16 | sehr gering | sehr hoch | sehr gut |
| Vergleichsbeispiel 1 | mittel | 96,1 | 12 | mittel | gering | mittel |
| Vergleichsbeispiel 2 | gering | 97,7 | 13 | mittel-gering | hoch-mittel | sehr gut |

| | | | | | | |
|---|---|---|---|---|---|---|
| Wassermenge: 540 g Trockenmörtel: 1.000 g | | | | | | |

Die Testergebnisse in Tabelle 4 zeigen, dass die erfindungsgemäßen Copolymere vor allem in dem Beurteilungskriterium Klebrigkeit und der damit einhergehenden Leichtgängigkeit eine deutliche Verbesserung gegenüber den Spezies gemäß Vergleichsbeispiel 1 und 2 erreicht werden konnte. Weiterhin bewirken die erfindungemäßen Copolymere eine gute Standfestigkeit. Es ist möglich, äußerst dicke Putzschichten aufzutragen, diese leichtgängig zu verarbeiten, ohne dass die Putzmischung von der Wand sackt. Dieser Vorteil wird vor allem mit den polymeren Mischungen 1 und 2 verdeutlicht. Auch die Wasserretentionseigenschaften der erfindungsgemäßen Copolymere liegen über denen der Spezies gemäß der Vergleichsbeispiele 1 und 2. Die angenehme und einfache Verarbeitbarkeit führt zu einer deutlichen Reduzierung des Kraftaufwandes beim Anwerfen und Verteilen des frischen Gipsputzes und zu einer Vereinfachung der einzelnen Arbeitsschritte. Alle Copolymere zeigen durchwegs ein hohes Niveau im Hinblick auf Luftporenstabilität. Davon zeichnen sich wiederum die Copolymere 4, 5, 6, 8 und 9 besonders aus, die eine besonders gute Luftporenstabilität und eine damit verbesserte Verteilbarkeit der Putzmischung ermöglichen.

## Patentansprüche

1. Copolymer aufweisend,
i) 5 bis 60 Mol-% einer Struktureinheit a),
ii) 20 bis 80 Mol-% einer Struktureinheit b) und
iii) 0,01 bis 3 Mol-% einer Struktureinheit c),
wobei die Struktureinheit a) durch folgende allgemeine Formel (I) repräsentiert wird: 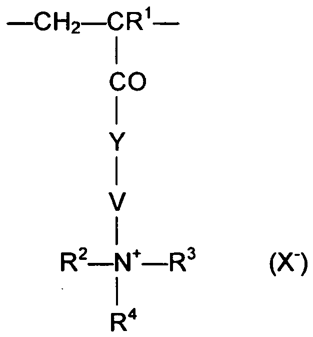 worin
R¹ gleich oder verschieden ist und durch Wasserstoff und/oder einen Methylrest repräsentiert wird,
R² und R³ jeweils gleich oder verschieden sind und unabhängig voneinander jeweils durch Wasserstoff, einen aliphatischen Kohlenwasserstoffrest mit 1 bis 20 C-Atomen, einen cycloaliphatischen Kohlenwasserstoffrest mit 5 bis 8 C-Atomen und/oder einen Arylrest mit 6 bis 14 C-Atomen, repräsentiert werden,
R⁴ gleich oder verschieden ist und durch einen mit R² oder R³ identischem Substituenten, -(CH₂)ₓ-SO₃Mₖ, 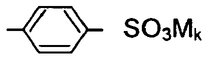 und/oder 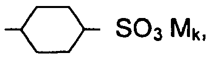 repräsentiert wird,
M gleich oder verschieden ist und durch ein ein- oder zweiwertiges Metallkation, Ammoniumkation und/oder quarternäres Ammoniumkation (NR₁R₂R₃R₄)⁺, repräsentiert wird,
k gleich oder verschieden ist und durch ½ und/oder 1 repräsentiert wird,
Y gleich oder verschieden ist und durch Sauerstoff, -NH und/oder - NR², repräsentiert wird, V gleich oder verschieden ist und durch -(CH₂)ₓ-, 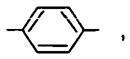 und/oder 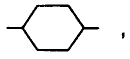 repräsentiert wird,
x gleich oder verschieden ist und durch eine ganze Zahl von 1 bis 6 repräsentiert wird,
X gleich oder verschieden ist und durch ein Halogenatom, C₁- bis C₄-Alkylsulfat und/oder C₁- bis C₄-Alkylsulfonat, repräsentiert wird, die Struktureinheit b) durch folgende allgemeine Formeln (IIa) und/oder (IIb) repräsentiert wird: 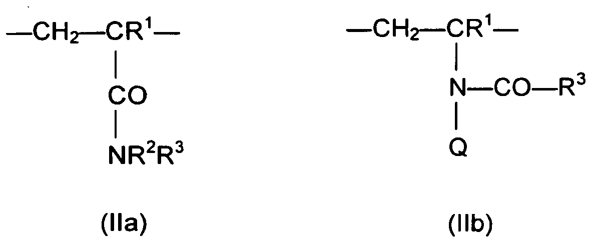
worin
Q gleich oder verschieden ist und durch Wasserstoff und/oder -CHR²R⁵ repräsentiert wird.
R¹, R² und R³ jeweils mit der Maßgabe die vorstehend genannten Bedeutungen haben, dass im Falle von Q ungleich Wasserstoff R² und R³ in der allgemeinen Formel (IIb) zusammen für eine -CH₂-(CH₂)_{y}- Methylengruppe stehen können, so dass die allgemeine Formel (IIb) gemäß folgender Struktur vorliegt: 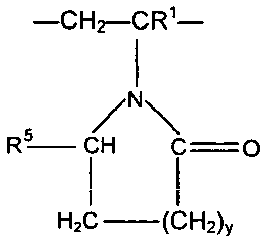 mit
R5 gleich oder verschieden sowie repräsentiert durch ein Wasserstoffatom, einen C₁- bis C₄-Alkylrest, eine Carbonsäuregruppe und/oder eine Carboxylatgruppe -COOMₖ, wobei y gleich oder verschieden ist und durch eine ganze Zahl von 1 bis 4 repräsentiert wird, sowie M und k jeweils die vorstehend genannten Bedeutungen haben,
die Struktureinheit c) durch die allgemeinen Formel (III) repräsentiert wird: 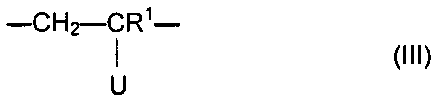 worin
U gleich oder verschieden ist und durch -COO(CₙH₂ₘO)ₙ-R⁶ und/oder -(CH₂)p-O(CₘH₂ₘO)ₙ-R⁶ repräsentiert wird,
m gleich oder verschieden ist und durch eine ganze Zahl zwischen 2 und 4 repräsentiert wird,
n gleich oder verschieden ist und durch eine ganze Zahl zwischen 1 und 200 repräsentiert wird,
p gleich oder verschieden ist und durch eine ganze Zahl zwischen 0 und 20 repräsentiert wird,
R⁶ gleich oder verschieden ist und durch 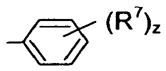 repräsentiert wird,
R⁷ gleich oder verschieden ist und durch Wasserstoff, eine C₁- bis C₆-Alkylgruppe, und/oder eine Arylalkylgruppe mit C₁- bis C₁₂-Alkyl-sowie C₆- bis C₁₄-Arylrest repräsentiert wird,
z gleich oder verschieden ist und durch eine ganze Zahl zwischen 1 und 3 repräsentiert wird und
R¹ die vorstehend genannte Bedeutung hat.

2. Copolymer nach Anspruch 1, **dadurch gekennzeichnet, dass** die Struktureinheit a) aus der Polymerisation von ein oder mehreren der Monomerspezies
[2-(Acryloyloxy)-ethyl]-trimethyl- ammoniumchlorid, [2-(Acryloylamino)-ethyl]-trimethyl-ammoniumchlorid, [2-(Acryloyloxy)-ethyl]-trimethyl-ammoniummethosulfat, [2-(Methacryloyloxy)-ethyl]-trimethylammonium-chlorid bzw. -methosulfat, [3-(Acryloylamino)-propyl]-trimethylammoniumchlorid, [3-(Methacryloylamino)-propyl]-trimethylammoniumchlorid, N-(3-Sulfopropyl)-N-methyacryloxyethyl-N'-N-dimethyl-ammonium-betain, N-(3-Sulfopropyl)-N-methyacrylamidopropyl-N,N-dimethyl-ammonium-betain und/oder 1-(3-Sulfopropyl)-2-vinyl-pyridinium-betain,
hervorgeht.

3. Copolymer nach Anspruch 1 oder 2, **dadurch gekennzeichnet, dass** die Struktureinheit b) aus der Polymerisation von ein oder mehreren der Monomerspezies
Acrylamid, Methacrylamid, N-Methylacrylamid, N,N-Dimethylacrylamid, N-Ethylacrylamid, N-Cyclohexylacrylamid, N-Benzylacrylamid, N-Methylolacrylamid, N-tertiär Butylacrylamid usw. Beispiele für Monomere als Basis für die Struktur (IIb) sind N-Methyl-N-vinylformamid, N-Methyl-N-vinylacetamid, N-Vinylpyrrolidon, N-Vinylcaprolactam und/oder N-Vinylpyrrolidon-5-carbonsäure, hervorgeht.

4. Copolymer nach einem der Ansprüche 1 bis 3, **dadurch gekennzeichnet,**
**dass** die Struktureinheit c) aus der Polymerisation von ein oder mehrerer der Monomerspezies
Tristyrylphenol-polyethylenglykol-1100-methacrylat, Tristyrylphenol-polyethylenglykol-1100-acrylat, Tristyrylphenol-polyethenglykol-1100-monovinylether, Tristyrylphenol-polyethylenglykol-1100-vinyloxy-butylether und/oder Tristyrylphenol-polyethylenglykol-block-propylenglykolallylether, hervorgeht.

5. Copolymer nach einem der Ansprüche 1 bis 4, **dadurch gekennzeichnet, dass** die Struktureinheiten a) mit 15 bis 50 Mol-%, b) mit 30 bis 75 Mol-% und c) mit 0,03 bis 1 Mol-% enthalten sind.

6. Copolymer nach einem der Ansprüche 1 bis 5 enthaltend bis zu 5 Mol-%, bevorzugt 0,05 bis 3 Mol-% einer Struktureinheit d), welche durch die allgemeine Formel (IV) repräsentiert wird: 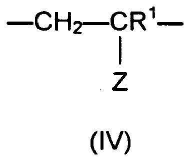 worin
Z gleich oder verschieden ist und durch -COO(CₘH₂ₘO)ₙ-R⁸ und/oder -(CH₂)ₚ-O(CₘH₂ₘO)ₙ-R⁸, repräsentiert wird,
R⁸ gleich oder verschieden ist und durch H und/oder C₁- bis C₄-Alkyl repräsentiert wird, sowie
R¹, m, n und p die jeweils vorstehend genannten Bedeutungen haben.

7. Copolymer nach Anspruch 6, **dadurch gekennzeichnet, dass** die Struktureinheit d) aus der Polymerisation ein oder mehrerer der folgenden Monomerspezies
Allylpolyethylenglykol-(350 bis 2000), Methylpolyethylenglykol-(350 bis 3000)-monovinylether, Polyethylenglykol-(500 bis 5000)-vinyloxy-butylether, Polyethylenglykol-block-propylenglykol-(500 bis 5000)-vinyloxy-butylether, Methylpolyethylenglykol-block-propylenglykolallylether, Methylpolyethylenglykol-750-methacrylat, Polyethylenglykol-500-methacrylat, Methylpolyethylenglykol-2000-monovinylether und/oder Methylpolyethylenglykol-block-propylenglykolallylether,
hervorgeht.

8. Copolymer nach einem der Ansprüche 1 bis 7 enthaltend bis zu 40 Mol-%, bevorzugt 0,1 bis 30 Mol-%, einer Struktureinheit e), welche durch die allgemeine Formel (V) repräsentiert wird: 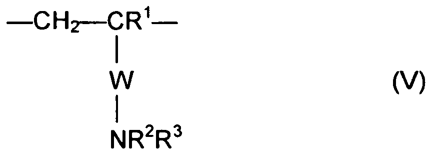 worin
W gleich oder verschieden ist und durch -CO-O-(CH₂)ₓ- und/oder -CO-NR²-(CH₂)ₓ- repräsentiert wird, sowie
R¹, R², R³ und x jeweils die vorstehend genannten Bedeutungen haben.

9. Copolymer nach Anspruch 8, **dadurch gekennzeichnet, dass** die Struktureinheit e) aus der Polymerisation ein oder mehrerer der folgenden Monomerspezies
[3-(Methacryloylamino)-propyl]-dimethylamin, [3-(Acryloylamino)-propyl]-dimethylamin, [2-(Methacryloyl-oxy)-ethyl]-dimethylamin, [2-(Acryloyl-oxy)-ethyl]-dimethylamin, [2-(Methacryloyl-oxy)-ethyl]-diethylamin und/oder [2-(Acryloyl-oxy)-ethyl]-diethylamin,
hervorgeht.

10. Copolymer nach einem der Ansprüche 1 bis 9, enthaltend bis zu 20 Mol-%, bevorzugt 0,1 bis 10 Mol-%, einer Struktureinheit f), welche durch die allgemeine Formel (VI) repräsentiert wird: 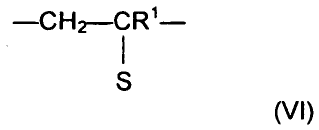 worin
S gleich oder verschieden ist und durch -COOMₖ repräsentiert wird, sowie
M, k und R¹ jeweils die vorstehend genannten Bedeutungen haben.

11. Copolymer nach Anspruch 10, **dadurch gekennzeichnet, dass** die Struktureinheit f) aus der Polymerisation ein oder mehrerer der folgenden Monomerspezies
Acrylsäure, Natriumacrylat, Methacrylsäure und/oder Natriummethacrylat, hervorgeht.

12. Copolymer nach einem der Ansprüche 1 bis 11 aufweisend ein zahlenmittleres Molekulargewicht von 50.000 bis 20.000.000.

13. Copolymer nach einem der Ansprüche 1 bis 12, welches verzweigte und/oder vernetzte Bereiche aufweist.

14. Verfahren zur Herstellung eines Copolymers nach einem der Ansprüche 1 bis 13 durch radikalische Polymerisation in wässriger Phase, durch radikalische Polymerisation in umgekehrter Emulsion oder durch radikalische Polymerisation in inverser Suspension.

15. Verfahren nach Anspruch 14, **dadurch gekennzeichnet, dass** die radikalische Polymerisation als Gelpolymerisation in wässriger Phase erfolgt.

16. Verfahren nach Anspruch 14 oder 15, **dadurch gekennzeichnet, dass** die radikalische Polymerisation in Gegenwart eines Vernetzers erfolgt.

17. Verwendung eines Copolymers gemäß eines der Ansprüche 1 bis 16 ais Zusatzmittel für wässrige Baustoffsysteme, die hydraulische Bindemittel, insbesondere Zement, Kalk, Gips oder Anhydrit, enthalten.

18. Verwendung nach Anspruch 17, **dadurch gekennzeichnet, dass** das hydraulische Bindemittel als Trockenmörtelkomposition, insbesondere als Fliesenkleber oder Gipsputz, vorliegt.

19. Verwendung nach Anspruch 17 oder 18, die in Kombination mit nichtionischen Polysaccharid-Derivaten erfolgt.

20. Polymere Mischung enthaltend
α) ein Copolymer nach einem der Ansprüche 1 bis 13 und
β) ein anionisches Tensid, welches durch die allgemeine Formeln
(VII) J-K
oder
(VIII) T-B-K
repräsentiert wird,
wobei J und T jeweils den hydrophoben Teil des Tensids darstellt, K eine anionische funktionelle Gruppe ist, T einen hydrophoben Teil des Tensids darstellt und B eine Spacer-Gruppe ist, wobei
J durch einen aliphatischen Kohlenwasserstoffrest mit 8 bis 30 C-Atomen, einen cycloaliphatischen Kohlenwasserstoffrest mit 5 bis 8 C-Atomen oder einen Arylrest mit 6 bis 14 C-Atomen repräsentiert wird,
K durch -SO₃Mₖ, -OSO₃Mₖ, -COOMₖ, oder -OP(O)(OH)OMₖ repräsentiert wird,
M und k jeweils die vorstehend genannte Bedeutung haben,
T durch einen aliphatischen Kohlenwasserstoffrest mit 8 bis 30 C-Atomen, einen cycloaliphatischen Kohlenwasserstoffrest mit 5 bis 8 C-Atomen, einen Arylrest mit 6 bis 14 C-Atomen oder R⁶,repräsentiert wird,
B durch -O(CₘH₂ₘO)ₙ- repräsentiert wird, sowie
K, R⁶, m und n jeweils die vorstehend genannten Bedeutungen haben.

21. Polymere Mischung nach Anspruch 20, aufweisend 80 bis 99 Gew. % des Copolymers und 1 bis 20 Gew. % des anionischen Tensids.

22. Polymere Mischung nach Anspruch 20 oder 21, **dadurch gekennzeichnet, dass** das anionische Tensid gemäß der allgemeinen Formel (VII) als Alkylsulfonat, Arylsulfonat, Alphaolefinsulfonat, Alkysphosphat oder als Fettsäuresalz und das anionische Tensid der allgemeinen Formel (VIII) als Alkylethersulfat vorliegt.

23. Verwendung einer polymeren Mischung nach einem der Ansprüche 20 bis 22 als Zusatzmittel für wässrige Baustoffsysteme, die hydraulische Bindemittel enthalten.

24. Verwendung nach Anspruch 22, die in Kombination mit nichtionischen Polysaccharid-Derivaten erfolgt.

## Claims

1. Copolymer comprising,
i) 5 to 60 mol% of a structural unit a),
ii) 20 to 80 mol% of a structural unit b) and
iii) 0.01 to 3 mol% of a structural unit c),
the structural unit a) being represented by the following general formula (I): 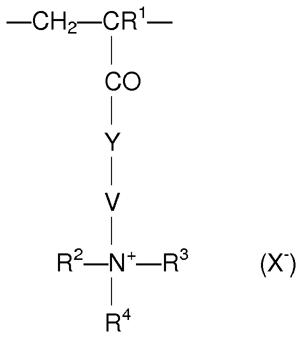 in which
R¹ is identical or different and is represented by hydrogen and/or a methyl radical,
R² and R³ are each identical or different and, independently of one another, are each represented by hydrogen, an aliphatic hydrocarbon radical having 1 to 20 C atoms, a cycloaliphatic hydrocarbon radical having 5 to 8 C atoms and/or an aryl radical having 6 to 14 C atoms,
R⁴ is identical or different and is represented by a substituent identical to R² or R³, - (CH₂)ₓ-SO₃Mₖ, 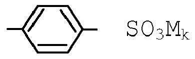 and/or 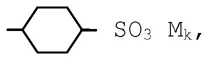
M is identical or different and is represented by a monovalent or divalent metal cation, ammonium cation and/or quaternary ammonium cation (NR₁R₂R₃R₄)⁺,
k is identical or different and is represented by ½ and/or 1,
Y is identical or different and is represented by oxygen, -NH and/or -NR²,
V is identical or different and is represented by -(CH₂)ₓ-, 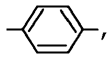 and/or 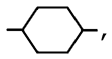
x is identical or different and is represented by an integer from 1 to 6,
X is identical or different and is represented by a halogen atom, C₁- to C₄-alkylsulphate and/or C₁- to C₄-alkanesulphonate,
the structural unit b) being represented by the following general formulae (IIa) and/or (IIb): 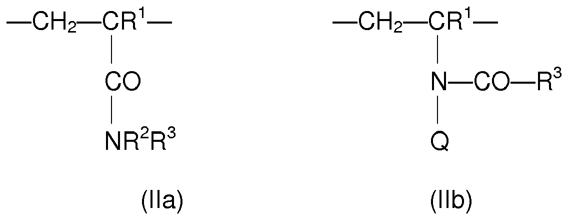 in which
Q is identical or different and is represented by hydrogen and/or -CHR²R⁵,
R¹, R² and R³ each have the abovementioned meanings, with the proviso that, where Q is not hydrogen, R² and R³ in the general formula (IIb) together may represent a -CH₂-(CH₂)_{y}-methylene group, so that the general formula (IIb) is present according to the following structure: 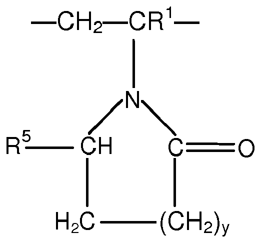 where
R⁵ is identical or different and is represented by a hydrogen atom, a C₁- to C₄-alkyl radical, a carboxyl group and/or a carboxylate group -COOMₖ, y being identical or different and being represented by an integer from 1 to 4, and M and k each have the abovementioned meanings,
the structural unit c) being represented by the general formula (III): 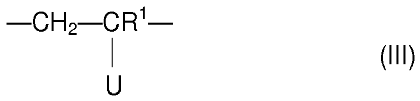 in which
U is identical or different and is represented by -COO(CₘH₂ₘO)ₙ-R⁶, and/or -(CH₂)ₚ-O(CₘH₂ₘO)ₙ-R⁶,
m is identical or different and is represented by an integer between 2 and 4,
n is identical or different and is represented by an integer between 1 and 200,
p is identical or different and is represented by an integer between 0 and 20,
R⁶ is identical or different and is represented by 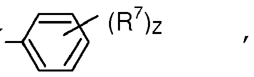
R⁷ is identical or different and is represented by hydrogen, a C₁- to C₆-alkyl group and/or an arylalkyl group having a C₁-to C₁₂-alkyl radical and C₆- to C₁₄-aryl radical,
z is identical or different and is represented by an integer between 1 and 3 and
R¹ has the abovementioned meaning.

2. Copolymer according to Claim 1, **characterized in that** the structural unit a) arises from the polymerization of one or more of the monomer species [2-(acryloyloxy)ethyl]trimethylammonium chloride, [2-(acryloylamino)ethyl]trimethylammonium chloride, [2-(acryloyloxy)ethyl]trimethylammonium methosulphate, [2-(methacryloyloxy)ethyl]trimethylammonium chloride or methosulphate, [3-(acryloylamino)propyl]trimethylammonium chloride, [3-(methacryloylamino)propyl]trimethylammonium chloride, N-(3-sulphopropyl)-N-methylacryloyloxyethyl-N',N-dimethylammonium betaine, N-(3-sulphopropyl)-N-methacrylamidopropyl-N,N-dimethylammonium betaine and/or 1-(3-sulphopropyl)-2-vinylpyridinium betaine.

3. Copolymer according to Claim 1 or 2, **characterized in that** the structural unit b) arises from the polymerization of one or more of the monomer species acrylamide, methacrylamide, N-methylacrylamide, N,N-dimethylacrylamide, N-ethylacrylamide, N-cyclohexylacrylamide, N-benzylacrylamide, N-methylolacrylamide, N-tert-butylacrylamide, etc. Examples of monomers as a basis for the structure (IIb) are N-methyl-N-vinylformamide, N-methyl-N-vinylacetamide, N-Vinylpyrrolidone, N-vinylcaprolactam and/or N-vinylpyrrolidone-5-carboxylic acid.

4. Copolymer according to any of Claims 1 to 3, **characterized in that** the structural unit c) arises from the polymerization of one or more of the monomer species
tristyrylphenol polyethylene glycol-1100-methacrylate, tristyrylphenol polyethylene glycol-1100-acrylate, tristyrylphenol polyethylene glycol-1100-monovinyl ether, tristyrylphenol polyethylene glycol-1100 vinyloxybutyl ether and/or tristyrylphenol polyethylene glycol-block-propylene glycol allyl ether.

5. Copolymer according to any of Claims 1 to 4, **characterized in that** the structural units a) are present in an amount of 15 to 50 mol%, b) in an amount of 30 to 75 mol% and c) in an amount of 0.03 to 1 mol%.

6. Copolymer according to any of Claims 1 to 5, containing up to 5 mol%, preferably 0.05 to 3 mol%, of a structural unit d) which is represented by the general formula (IV): 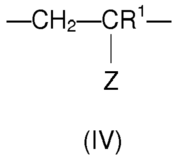 in which
Z is identical or different and is represented by -COO(CₘH₂ₘO)ₙ-R⁸ and/or - (CH₂)ₚ-O(CₘH₂ₘO)ₙ-R⁸,
R⁸ is identical or different and is represented by H and/or C₁- to C₄-alkyl and
R¹, m, n and p have the meanings mentioned in each case above.

7. Copolymer according to Claim 6, **characterized in that** the structural unit d) arises from the polymerization of one or more of the following monomer species
allylpolyethylene glycol-(350 to 2000), methylpolyethylene glycol-(350 to 3000) monovinyl ether, polyethylene glycol-(500 to 5000) vinyloxybutyl ether, polyethylene glycol-block-propylene glycol-(500 to 5000) vinyloxybutyl ether, methylpolyethylene glycol-block-propylene glycol allyl ether, methylpolyethylene glycol-750 methacrylate, polyethylene glycol-500 methacrylate, methylpolyethylene glycol-2000 monovinyl ether and/or methylpolyethylene glycol-block-propylene glycol allyl ether.

8. Copolymer according to any of Claims 1 to 7 containing up to 40 mol%, preferably from 0.1 to 30 mol%, of a structural unit e) which is represented by the general formula (V): 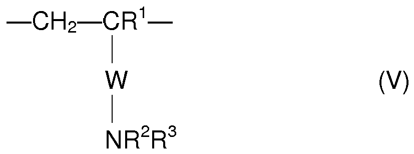 in which
W is identical or different and is represented by -CO-O-(CH₂)ₓ- and/or -CO-NR²-(CH₂)ₓ- and
R¹, R², R³ and x each have the abovementioned meanings.

9. Copolymer according to Claim 8, **characterized in that** the structural unit e) arises from the polymerization of one or more of the following monomer species
[3-(methacryloylamino)propyl]dimethylamine, [3-(acryloylamino)propyl]dimethylamine, [2-(methacryloyloxy)ethyl]dimethylamine, [2-(acryloyloxy)ethyl]dimethylamine, [2-(methacryloyloxy)ethyl]diethylamine and/or [2-(acryloyloxy)ethyl]diethylamine.

10. Copolymer according to any of Claims 1 to 9, containing up to 20 mol%, preferably 0.1 to 10 mol%, of a structural unit f) which is represented by the general formula (VI): 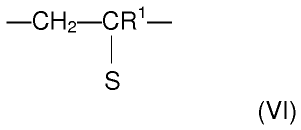 in which
S is identical or different and is represented by -COOMₖ and
M, k and R¹ each have the abovementioned meanings.

11. Copolymer according to Claim 10, **characterized in that** the structural unit f) arises from the polymerization of one or more of the following monomer species acrylic acid, sodium acrylate, methacrylic acid and/or sodium methacrylate.

12. Copolymer according to any of Claims 1 to 11, having a number average molecular weight of 50 000 to 20 000 000.

13. Copolymer according to any of Claims 1 to 12, which has branched and/or crosslinked regions.

14. Process for the preparation of a copolymer according to any of Claims 1 to 13 by free radical polymerization in the aqueous phase, by free radical polymerization in inverse emulsion or by free radical polymerization in inverse suspension.

15. Process according to Claim 14, **characterized in that** the free radical polymerization is effected as a gel polymerization in the aqueous phase.

16. Process according to Claim 14 or 15, **characterized in that** the free radical polymerization is effected in the presence of a crosslinking agent.

17. Use of a copolymer according to any of Claims 1 to 16 as an admixture for aqueous building material systems which contain hydraulic binders, in particular cement, lime, gypsum or anhydrite.

18. Use according to Claim 17, **characterized in that** the hydraulic binder is present as a dry mortar composition, in particular as tile adhesive or gypsum plaster.

19. Use according to Claim 17 or 18, which is effected in combination with non-ionic polysaccharide derivatives.

20. Polymeric mixture containing
α) a copolymer according to any of Claims 1 to 13 and
β) an anionic surfactant which is represented by the general formulae
(VII) J-K
or
(VIII) T-B-K,
J and T each representing the hydrophobic part of the surfactant, K being an anionic functional group, T representing a hydrophobic part of the surfactant and B being a spacer group,
J being represented by an aliphatic hydrocarbon radical having 8 to 30 C atoms, a cycloaliphatic hydrocarbon radical having 5 to 8 C atoms or an aryl radical having 6 to 14 C atoms,
K being represented by -SO₃Mₖ, -OSO₃Mₖ, -COOMₖ, or -OP(O)(OH)OMₖ,
M and k each having the abovementioned meaning,
T being represented by an aliphatic hydrocarbon radical having 8 to 30 C atoms, a cycloaliphatic hydrocarbon radical having 5 to 8 C atoms, an aryl radical having 6 to 14 C atoms or R⁶,
B being represented by -O(CₘH₂ₘO)ₙ- and
K, R⁶, m and n each having the abovementioned meanings.

21. Polymeric mixture according to Claim 20, comprising 80 to 99% by weight of the copolymer and 1 to 20% by weight of the anionic surfactant.

22. Polymeric mixture according to Claim 20 or 21, **characterized in that** the anionic surfactant according to the general formula (VII) is present as alkanesulphonate, arylsulphonate, alpha-olefinsulphonate or alklyphosphate or as a fatty acid salt, and the anionic surfactant of the general formula (VIII) as alkyl ether sulphate.

23. Use of a polymeric mixture according to any of Claims 20 to 22 as an admixture for aqueous building material systems which contain hydraulic binders.

24. Use according to Claim 22, which is effected in combination with non-ionic polysaccharide derivatives.

## Revendications

1. Copolymère comprenant :
i) 5 à 60 % en moles d'une unité structurale a),
ii) 20 à 80 % en moles d'une unité structurale b) et
iii) 0,01 à 3 % en moles d'une unité structurale c), l'unité structurale a) étant représentée par la formule générale (I) suivante : 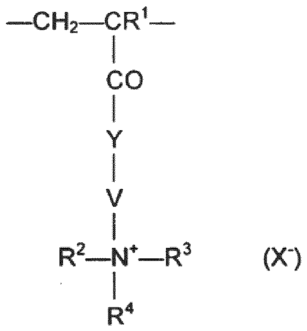 dans laquelle
R¹ est identique ou différent et est représenté par hydrogène et/ou un radical méthyle,
R² et R³ sont chacun identiques ou différents et sont représentés chacun indépendamment l'un de l'autre par hydrogène, un radical hydrocarboné aliphatique contenant 1 à 20 atomes C, un radical hydrocarboné cycloaliphatique contenant 5 à 8 atomes C et/ou un radical aryle contenant 6 à 14 atomes C,
R⁴ est identique ou différent et est représenté par un substituant identique à R² ou R³, - (CH₂)ₓ-SO₃Mₖ, 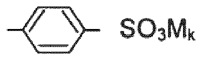 et/ou 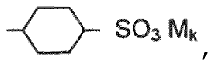 M est identique ou différent et est représenté par un cation métallique mono- ou bivalent, un cation ammonium et/ou un cation ammonium quaternaire (NR₁R₂R₃R₄)⁺,
k est identique ou différent et est représenté par ½ et/ou 1,
Y est identique ou différent et est représenté par oxygène, -NH et/ou -NR²,
V est identique ou différent et est représenté par -
(CH₂)ₓ-, 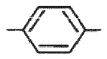 et/ou 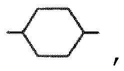 x est identique ou différent et est représenté par un nombre entier de 1 à 6,
X est identique ou différent et est représenté par un atome d'halogène, un sulfate d'alkyle en C₁ à C₄ et/ou un sulfonate d'alkyle en C₁ à C₄,
l'unité structurale b) étant représentée par les formules générales (IIa) et/ou (IIb) suivantes : 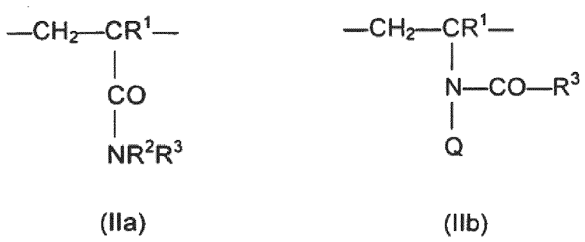 dans lesquelles
Q est identique ou différent et est représenté par hydrogène et/ou -CHR²R⁵,
R¹, R² et R³ ont chacun les significations indiquées précédemment, à condition que lorsque Q est différent de l'hydrogène, R² et R³ dans la formule générale (IIb) puissent représenter ensemble un groupe méthylène -CH₂-(CH₂)_{y}-, de manière à ce que la formule générale (IIb) se présente selon la structure suivante : 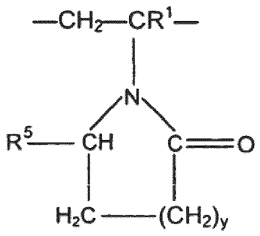 avec
R⁵ identique ou différent et représenté par un atome d'hydrogène, un radical alkyle en C₁ à C₄, un groupe acide carboxylique et/ou un groupe carboxylate -COOMₖ, y étant identique ou différent et représenté par un nombre entier de 1 à 4, et M et k ayant chacun les significations indiquées précédemment,
l'unité structurale c) étant représentée par la formule générale (III) : 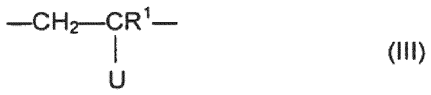 dans laquelle
U est identique ou différent et est représenté par - COO(CₘH₂ₘO)ₙ-R⁶ et/ou -(CH₂)ₚ-O(CₘH₂ₘO)ₙ-R⁶,
m est identique ou différent et est représenté par un nombre entier compris entre 2 et 4,
n est identique ou différent et est représenté par un nombre entier compris entre 1 et 200,
p est identique ou différent et est représenté par un nombre entier compris entre 0 et 20,
R⁶ est identique ou différent et est représenté par 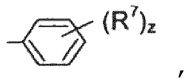 R⁷ est identique ou différent et est représenté par hydrogène, un groupe alkyle en C₁ à C₆ et/ou un groupe arylalkyle contenant un radical alkyle en C₁ à C₁₂ et un radical aryle en C₆ à C₁₄,
z est identique ou différent et est représenté par un nombre entier compris entre 1 et 3, et
R¹ a la signification indiquée précédemment.

2. Copolymère selon la revendication 1, **caractérisé en ce que** l'unité structurale a) provient de la polymérisation d'une ou de plusieurs des espèces monomères
chlorure de [2-(acryloyloxy)-éthyl]-triméthyl-ammonium, chlorure de [2-(acryloylamino)-éthyl]-triméthyl-ammonium, méthosulfate de [2-(acryloyloxy)-éthyl]-triméthyl-ammonium, chlorure ou méthosulfate de [2-(méthacryloyloxy)-éthyl]-triméthylammonium, chlorure de [3-(acryloylamino)-propyl]-triméthylammonium, chlorure de [3-(méthacryloylamino)-propyl]-triméthylammonium, N-(3-sulfopropyl)-N-méthylacryloxyéthyl-N'-N-diméthyl-ammonium-bétaïne, N-(3-sulfopropyl)-N-méthylacrylamidopropyl-N,N-diméthyl-ammonium-bétaïne et/ou 1-(3-sulfopropyl)-2-vinyl-pyridinium-bétaïne.

3. Copolymère selon la revendication 1 ou 2, **caractérisé en ce que** l'unité structurale b) provient de la polymérisation d'une ou de plusieurs des espèces monomères
acrylamide, méthacrylamide, N-méthylacrylamide, N,N-diméthylacrylamide, N-éthylacrylamide, N-cyclohexylacrylamide, N-benzylacrylamide, N-méthylolacrylamide, N-tert.-butylacrylamide, etc. Des exemples de monomères à base de la structure (IIb) sont le N-méthyl-N-vinylformamide, le N-méthyl-N-vinylacétamide, la N-vinylpyrrolidone, le N-vinylcaprolactame et/ou l'acide N-vinylpyrrolidone-5-carboxylique.

4. Copolymère selon l'une quelconque des revendications 1 à 3, **caractérisé en ce que** l'unité structurale c) provient de la polymérisation d'une ou de plusieurs des espèces monomères
méthacrylate de tristyrylphénol-polyéthylène glycol 1 100, acrylate de tristyrylphénol-polyéthylène glycol 1 100, éther monovinylique de tristyrylphénol-polyéthène glycol 1 100, éther vinyloxy-butylique de tristyrylphénol-polyéthylène glycol 1 100 et/ou tristyrylphénol-polyéthylène glycol-bloc-éther allylique de propylène glycol.

5. Copolymère selon l'une quelconque des revendications 1 à 4, **caractérisé en ce que** les unités structurales a) sont contenues à hauteur de 15 à 50 % en moles, b) à hauteur de 30 à 75 % en moles et c) à hauteur de 0,03 à 1 % en moles.

6. Copolymère selon l'une quelconque des revendications 1 à 5, contenant jusqu'à 5 % en moles, de préférence 0, 05 à 3 % en moles, d'une unité structurale d), qui est représentée par la formule générale (IV) : 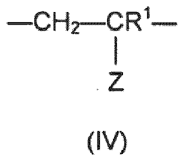 dans laquelle
Z est identique ou différent et est représenté par - COO (CₘH₂ₘO)ₙ-R⁸ et/ou -(CH₂)ₚ-O(CₘH₂ₘO)ₙ-R⁸,
R⁸ est identique ou différent et est représenté par H et/ou alkyle en C₁ à C₄, et
R¹, m, n et p ont chacun les significations indiquées précédemment.

7. Copolymère selon la revendication 6, **caractérisé en ce que** l'unité structurale d) provient de la polymérisation d'une ou de plusieurs des espèces monomères suivantes
allylpolyéthylène glycol (350 à 2 000), éther monovinylique de méthylpolyéthylène glycol (350 à 3 000), éther vinyloxy-butylique de polyéthylène glycol (500 à 5 000), polyéthylène glycol-bloc-éther vinyloxy-butylique de propylène glycol (500 à 5 000), méthylpolyéthylène glycol-bloc-éther allylique de propylène glycol, méthacrylate de méthylpolyéthylène glycol 750, méthacrylate de polyéthylène glycol 500, éther monovinylique de méthylpolyéthylène glycol 2 000 et/ou méthylpolyéthylène glycol-bloc-éther allylique de propylène glycol.

8. Copolymère selon l'une quelconque des revendications 1 à 7, contenant jusqu'à 40 % en moles, de préférence 0,1 à 30 % en moles, d'une unité structurale e), qui est représentée par la formule générale (V) : 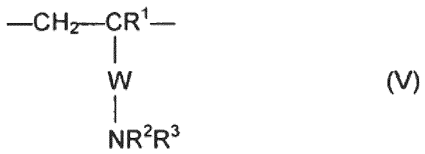 dans laquelle
W est identique ou différent et est représenté par - CO-O-(CH₂)x- et/ou -CO-NR²-(CH₂)ₓ-, et
R¹, R², R³ et x ont chacun les significations indiquées précédemment.

9. Copolymère selon la revendication 8, **caractérisé en ce que** l'unité structurale e) provient de la polymérisation d'une ou de plusieurs des espèces monomères suivantes
[3-(méthacryloylamino)-propyl]-diméthylamine, [3-(acryloylamino)-propyl]-diméthylamine, [2-(méthacryloyl-oxy)-éthyl]-diméthylamine, [2-(acryloyl-oxy)-éthyl]-diméthylamine, [2-(méthacryloyl-oxy)-éthyl]-diéthylamine et/ou [2-(acryloyl-oxy)-éthyl]-diéthylamine.

10. Copolymère selon l'une quelconque des revendications 1 à 9, contenant jusqu'à 20 % en moles, de préférence 0,1 à 10 % en moles, d'une unité structurale f), qui est représentée par la formule générale (VI) : 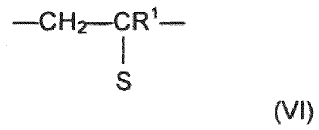 dans laquelle
S est identique ou différent et est représenté par - COOMₖ, et
M, k et R¹ ont chacun les significations indiquées précédemment.

11. Copolymère selon la revendication 10, **caractérisé en ce que** l'unité structurale f) provient de la polymérisation d'une ou de plusieurs des espèces monomères suivantes
acide acrylique, acrylate de sodium, acide méthacrylique et/ou méthacrylate de sodium.

12. Copolymère selon l'une quelconque des revendications 1 à 11, présentant un poids moléculaire moyen en nombre de 50 000 à 20 000 000.

13. Copolymère selon l'une quelconque des revendications 1 à 12, comprenant des zones ramifiées et/ou réticulées.

14. Procédé de préparation d'un copolymère selon l'une quelconque des revendications 1 à 13 par polymérisation radicalaire en phase aqueuse, par polymérisation radicalaire en émulsion inversée ou par polymérisation radicalaire en suspension inversée.

15. Procédé selon la revendication 14, **caractérisé en ce que** la polymérisation radicalaire a lieu sous la forme d'une polymérisation en gel en phase aqueuse.

16. Procédé selon la revendication 14 ou 15, **caractérisé en ce que** la polymérisation radicalaire a lieu en présence d'un agent de réticulation.

17. Utilisation d'un copolymère selon l'une quelconque des revendications 1 à 16 en tant qu'additif pour systèmes de matériaux de construction aqueux contenant des liants hydrauliques, notamment du ciment, de la chaux, du gypse ou de l'anhydrite.

18. Utilisation selon la revendication 17, **caractérisée en ce que** le liant hydraulique se présente sous la forme d'une composition sèche de mortier, notamment sous la forme d'un adhésif pour carreaux ou d'un enduit plâtre.

19. Utilisation selon la revendication 17 ou 18, qui a lieu en combinaison avec des dérivés de polysaccharide non ioniques.

20. Mélange polymère, contenant :
α) un copolymère selon l'une quelconque des revendications 1 à 13 et
β) un tensioactif anionique représenté par la formule générale
(VII) J-K
ou
(VIII) T-B-K
dans lesquelles J et T représentent chacun la partie hydrophobe du tensioactif, K est un groupe fonctionnel anionique, T représente une partie hydrophobe du tensioactif et B est un groupe espaceur,
J étant représenté par un radical hydrocarboné aliphatique contenant 8 à 30 atomes C, un radical hydrocarboné cycloaliphatique contenant 5 à 8 atomes C ou un radical aryle contenant 6 à 14 atomes C,
K étant représenté par -SO₃Mₖ, -OSO₃Mₖ, -COOMₖ ou - OP(O)(OH)OMₖ,
M et k ayant chacun la signification indiquée précédemment,
T étant représenté par un radical hydrocarboné aliphatique contenant 8 à 30 atomes C, un radical hydrocarboné cycloaliphatique contenant 5 à 8 atomes C,
un radical aryle contenant 6 à 14 atomes C ou R⁶,
B étant représenté par -O(CₘH₂ₘO)ₙ- et
K, R⁶, m et n ayant chacun les significations indiquées précédemment.

21. Mélange polymère selon la revendication 20, comprenant 80 à 99 % en poids du copolymère et 1 à 20 % en poids du tensioactif anionique.

22. Mélange polymère selon la revendication 20 ou 21, **caractérisé en ce que** le tensioactif anionique selon la formule générale (VII) se présente sous la forme d'un sulfonate d'alkyle, d'un sulfonate d'aryle, d'un sulfonate d'alpha-oléfine, d'un phosphate d'alkyle ou sous la forme d'un sel d'acide gras, et le tensioactif anionique de formule générale (VIII) se présente sous la forme d'un éther-sulfate d'alkyle.

23. Utilisation d'un mélange polymère selon l'une quelconque des revendications 20 à 22 en tant qu'additif pour systèmes de matériaux de construction aqueux contenant des liants hydrauliques.

24. Utilisation selon la revendication 22, qui a lieu en combinaison avec des dérivés de polysaccharide non ioniques.
